# FASCICULE DE BREVET EUROPEEN

(11) **EP 0 663 145 B1**
(45) Date de publication et mention de la délivrance du brevet: **12.04.2000**
(21) Numéro de dépôt: 95400046.9
(22) Date de dépôt: 10.01.1995
(51) Int. Cl.: A01F 29/00

(54) **Dérouleuse-pailleuse**
Vorrichtung zum Abrollen und Dispergieren von Rundballen
Device for the rewinding and dispersing of roundbales

(30) Priorité: 17.01.1994 FR 9400607
(43) Date de publication de la demande: 19.07.1995
(73) Titulaire: DEBOFFLES PERE & FILS, 02301 Chauny (FR)
(72) Inventeur: Beuvin, André, F-80430 Beaucamps-le-Vieux (FR)
(74) Mandataire: Bonnetat, Christian

(56) Documents cités:
- EP-A- 0 371 681
- FR-A- 2 499 820
- FR-A- 2 511 963
- FR-A- 2 599 933
- GB-A- 1 523 321
- US-A- 4 161 253
- US-A- 4 411 573
- US-A- 4 983 087
- US-A- 5 253 970

## Description

La présente invention permet le déroulage et la dispersion de la paille contenue dans un ballot rond de paille.

Cette invention sera utilisée principalement dans le domaine agricole pour constituer la litière aux animaux de la ferme.

La technique antérieure est constituée d'une soufflerie et d'un démêleur absorbant beaucoup de puissance, produisant une poussière très importante et risquant de projeter dangereusement les corps étrangers ramassés lors de la confection des ballots de paille.

L'invention est une machine complète.

A cette fin, selon l'invention, le dispositif pour dérouler et disperser la paille contenue dans un ballot rond, comportant un bâti pourvu de points d'ancrage à un tracteur agricole, est
caractérisé en ce qu'il comporte :
- de chaque côté dudit bâti, une fixation à palier supportant un ensemble comprenant un moteur hydraulique à axe et un disque avec aspérités et évidements, ledit ballot de paille étant supporté par lesdits disques qui tournent en sens inverses l'un par rapport à l'autre, ce qui permet la rotation sur lui-même du ballot de paille et sa dispersion ; et
- un levier-support, disposé entre lesdits disques et présentant la forme d'un L, dont les côtés ont des directions générales, respectivement verticale et horizontale.

On remarquera que le document US-A-4 161 253 décrit un dispositif pour dérouler et disperser des ballots de paille correspondant à la partie précaractérisante de la définition ci-dessus. Dans ce document antérieur, on prévoit deux cylindres, parallèles et horizontaux, montés en porte-à-faux sur ledit bâti à l'arrière du tracteur pour supporter et dérouler lesdits ballots. Quant à lui, le document EP-A-0 371 681 décrit un dispositif pour dérouler et disperser des ballots de paille, pourvu d'un tambour rotatif destiné à recevoir lesdits ballots et de lames rotatives passant à travers le fond dudit tambour.

Dans le dispositif de l'invention, les points d'ancrage permettent la fixation de la machine, soit à l'avant, soit à l'arrière d'un tracteur agricole et donc son relevage et son inclinaison.

Pour le fonctionnement de la machine, le ballot rond de paille est placé au centre de la machine, posé sur les deux portions de disques à l'intérieur du bâti.

L'inclinaison de la machine vers l'avant, par traction sur les points d'ancrage, provoque un petit déplacement du ballot de paille, qui, en fonction de son poids, exerce une force sur le côté vertical du support pivotant en forme de L. Ce support pivotant fait donc levier sous le ballot de paille par le côté horizontal de ce même support pivotant, diminuant ainsi le poids de paille sur les disques, dont la rotation est ainsi possible avec moteur à faible couple.

La mise en fonction des moteurs hydrauliques par rotation inverse entraîne les rotations inverses des disques l'un par rapport à l'autre, la rotation du ballot de paille sur lui-même et sa dispersion.

Le ballot de paille posé sur les disques effectue une rotation sur lui-même et se déroule. Les deux disques avec leurs aspérités et évidements, arrachent des poignées de paille et les laissent tomber au sol pendant leurs rotations.

A titre non limitatif, le diamètre de chaque disque est de 1,25 m et la distance entre chaque axe maintenant ces disques est de 1,30 m.

Les dessins annexés illustrent l'invention.

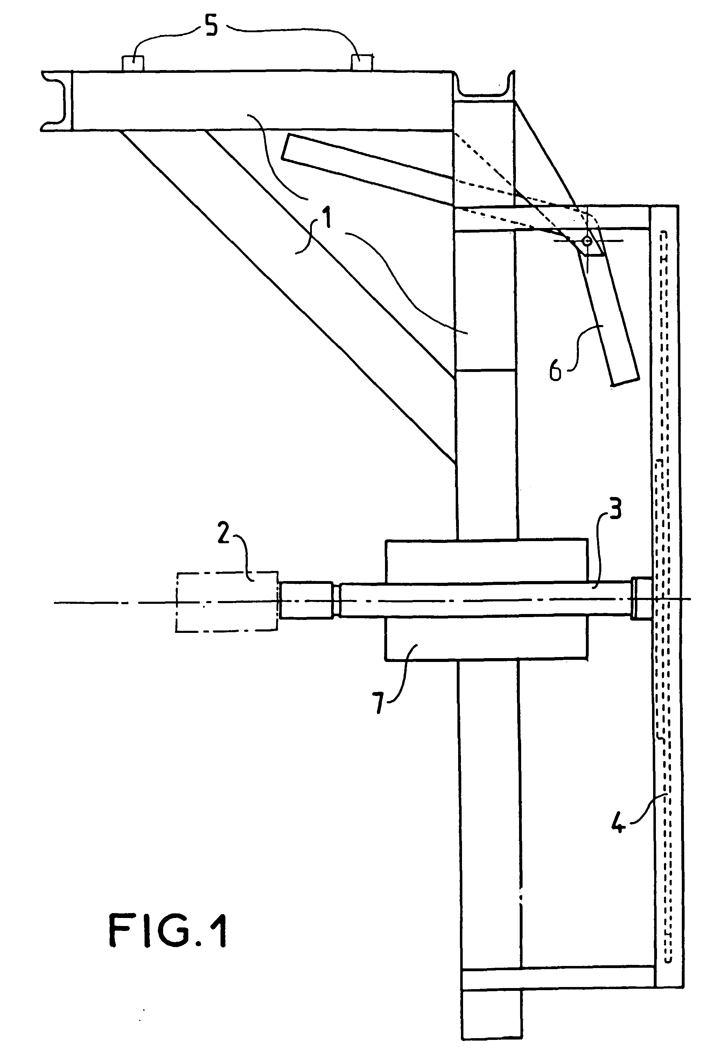

La figure 1 est une vue de côté de l'invention.

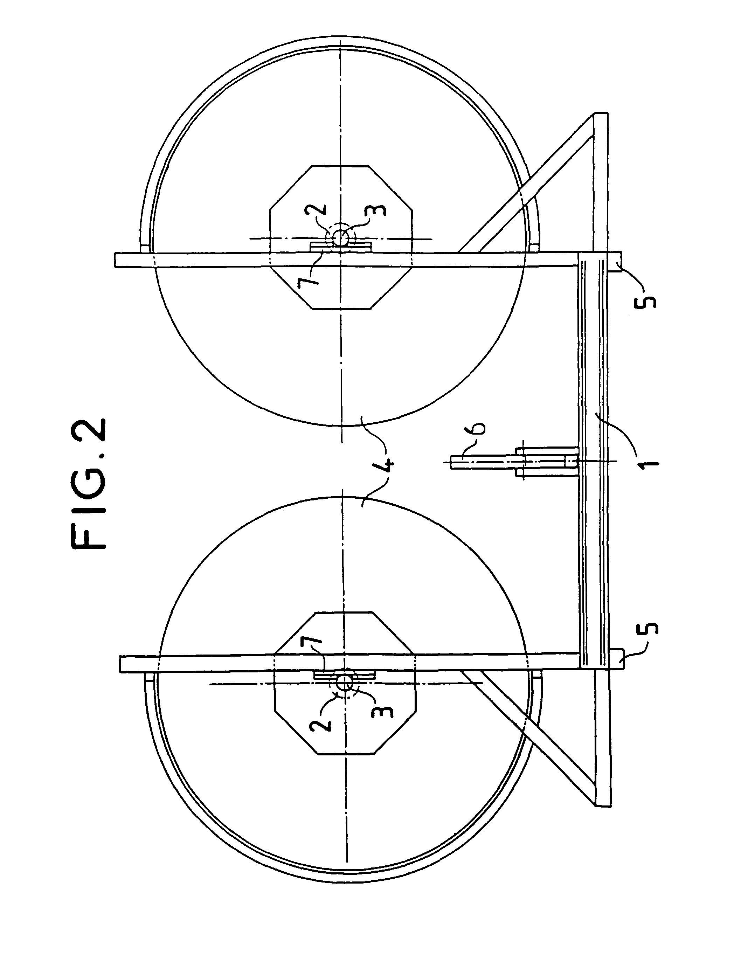

La figure 2 représente une vue de dessus.

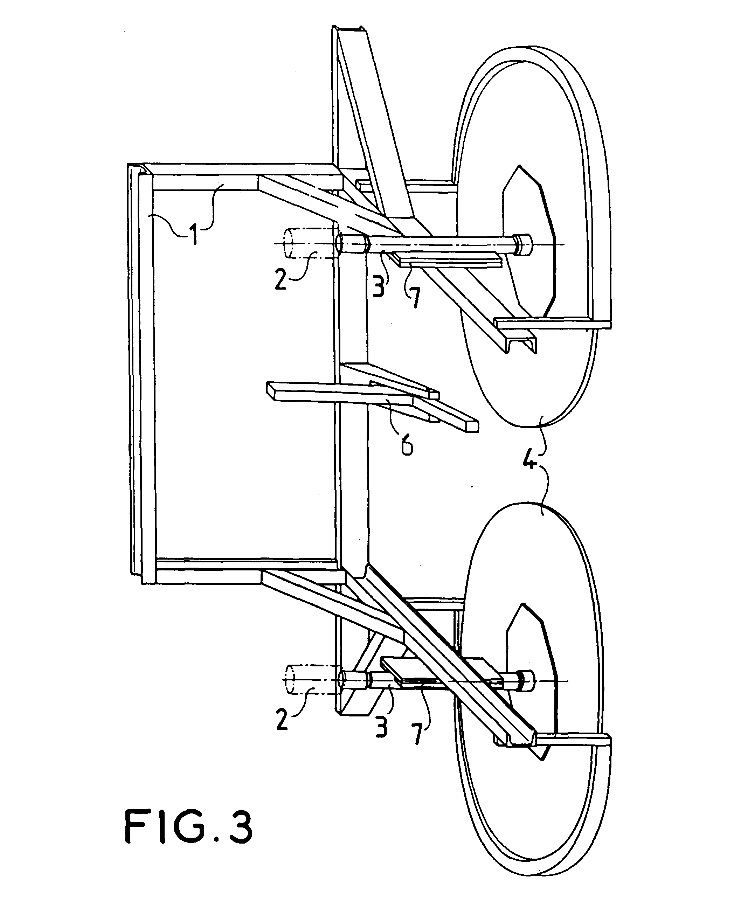

La figure 3 représente une vue par l'arrière.

En référence à ces dessins, le dispositif comporte une armature (1), un moteur d'entraînement (2), l'axe (3) par lequel est maintenu le disque, la fixation (7) de l'axe sur l'armature, le disque (4), les points d'ancrage (5) pour le déplacement et l'inclinaison de la machine, le support pivotant (6) entre les disques.

L'invention est susceptible d'application, car elle fait un travail rapide, demandant peu de puissance et ne faisant ni projection dangereuse, ni poussière conséquente.

## Revendications

1. Dispositif pour dérouler et disperser la paille contenue dans un ballot rond, comportant un bâti (1) pourvu de points d'ancrage (5) à un tracteur agricole,
caractérisé en ce qu'il comporte :
- de chaque côté dudit bâti (1), une fixation à palier (7) supportant un ensemble comprenant un moteur hydraulique (2) à axe (3) et un disque (4) avec aspérités et évidements, ledit ballot de paille étant supporté par lesdits disques qui tournent en sens inverses l'un par rapport à l'autre, ce qui permet la rotation sur lui-même du ballot de paille et sa dispersion ; et
- un levier-support (6), disposé entre lesdits disques et présentant la forme d'un L, dont les côtés ont des directions générales, respectivement verticale et horizontale.

2. Dispositif selon la revendication 1,
caractérisé en ce que le levier-support (6) provoque une moindre pression sur les disques facilitant une mise en rotation de la machine avec moteur hydraulique à faible couple, ceci grâce aux points d'ancrage (5) qui en relevant la machine l'inclinent vers l'avant, le poids du ballot faisant levier (6).

## Patentansprüche

1. Vorrichtung zum Abrollen und Verteilen von Stroh, das in einem Rundballen enthalten ist, aufweisend: ein Gestell (1), an dem Verankerungspunkte (5) für einen landwirtschaftlichen Traktor vorgesehen sind, dadurch gekennzeichnet, daß sie aufweist:
- auf jeder Seite des Gestells (1) eine Lagerbefestigungseinrichtung (7), die ein Ensemble abstützt, das einen hydraulischen Motor (2) für eine Achse (3) und eine Scheibe (4) mit Rauhigkeiten und Vertiefungen aufweist, wobei der Strohballen durch die Scheiben, die sich in entgegengesetztem Sinn zueinander drehen, abgestützt ist, wodurch die Rotation des Strohballens um sich selbst und seine Verteilung ermöglicht werden; und
- einen Stützhebel (6), der zwischen den Scheiben angeordnet ist und die Form eines L zeigt, dessen Seiten im wesentlichen vertikale und horizontale Richtungen haben.

2. Vorrichtung nach Anspruch 1, dadurch gekennzeichnet, daß der Stützhebel (6) einen geringeren Druck auf die Scheiben ausübt, der die Drehung der Maschine mit dem hydraulischen Motor mit geringem Drehmoment erleichtert, dieses aufgrund der Verankerungspunkte (5), die beim Anheben der Maschine dieselbe nach vorne schrägstellen, wobei das Gewicht des Ballens als Hebel (6) dient.

## Claims

1. Device for unwinding and dispersing the straw contained in a round bale, comprising a framework (1) equipped with points (5) for anchoring to an agricultural tractor,
characterized in that it comprises:
- on each side of the said framework (1), a mounting with a bearing (7) supporting an assembly comprising a hydraulic motor (2) with a shaft (3) and a disc (4) with roughnesses and cavities, the said bale of straw being supported by the said discs which rotate in opposite directions to one another, which allows the bale of straw to rotate on itself and be dispersed; and
- a support lever (6), arranged between the said discs and having the shape of a L, the sides of which respectively extend in vertical and horizontal overall directions.

2. Device according to Claim 1,
characterized in that the support lever (6) causes less pressure on the discs, making the machine easier to rotate with a low-torque hydraulic motor, this being by virtue of the anchoring points (5) which, on raising the machine, incline it forwards, the weight of the bale providing leverage (6).
